(19) Europäisches Patentamt
European Patent Office
Office européen des brevets

(11) **EP 3 581 599 A1**

(12) **EUROPÄISCHE PATENTANMELDUNG**

(43) Veröffentlichungstag:
18.12.2019  Patentblatt 2019/51

(51) Int Cl.:
*C08G 18/16* (2006.01)    *C08G 18/18* (2006.01)
*C08G 18/22* (2006.01)    *C08G 18/40* (2006.01)
*C08G 18/42* (2006.01)    *C08G 18/44* (2006.01)
*C08G 18/76* (2006.01)    *C08J 9/08* (2006.01)
*C08J 9/14* (2006.01)    *C08J 9/00* (2006.01)
*C08K 5/521* (2006.01)    *C08G 101/00* (2006.01)

(21) Anmeldenummer: 18178082.6

(22) Anmeldetag: 15.06.2018

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **THIOCARBONAT-HALTIGE PUR/PIR-HARTSCHÄUME UND DARAUS ERHALTENE POLYURETHANE**

(57)    Die vorliegende Erfindung betrifft ein Verfahren zur Herstellung von Polyurethan/Polyisocyanurat-Hartschaumstoffe enthaltend ein Polyetherthiocarbonat-Polyol, die daraus hergestellten Schaumstoffe und ihre Verwendung.

EP 3 581 599 A1

**Beschreibung**

Die vorliegende Erfindung betrifft ein Verfahren zur Herstellung von Polyurethan/Polyisocyanurat (PUR/PIR) - Hartschäumen auf Basis von Polyetherthiocarbonat-Polyolen, die mit diesem Verfahren hergestellten Schäume und deren Verwendung.

Polyurethan/Polyisocyanurat (PUR/PIR) - Hartschaumstoffe sind bekannt. Ihre Herstellung erfolgt üblicherweise durch Umsetzung eines Überschuss an Polyisocyanaten mit Verbindungen mit gegenüber Isocyanatgruppen reaktiven Wasserstoffatomen, insbesondere Polyolen. Als Polyole werden in erster Linie Polyether, Polyester und/oder Polyethercarbonatpolyole verwendet, die Hydroxyl-Endgruppen aufweisen. Durch den Isocyanat-Überschuss, in der Regel mit einem Isocyanatindex von mindestens 180 und größer, werden neben Urethanstrukturen, die durch die Umsetzung von Isocyanaten mit Verbindungen mit reaktiven Wasserstoffatomen entstehen, durch Reaktion der Isocyanatgruppen untereinander oder mit anderen Gruppen, wie zum Beispiel Polyurethangruppen, weitere Strukturen gebildet.

PUR/PIR-Hartschaumstoffe werden häufig als Isolationsmaterialien eingesetzt, beispielsweise als Dämmstoff in der Bauindustrie. Damit die gewünschten Schaumeigenschaften, z.B. Rohdichten und Wärmeisolationseigenschaften der PUR/PIR-Hartschäume erzielt werden können, werden dem Reaktionsgemisch physikalische Treibmittel zugesetzt.

So wie alle organischen Polymere sind auch PUR/PIR-Hartschaumstoffe brennbar, daher werden sie in der Regel mit Flammschutzmitteln oder flammschützenden Additiven versehen, wie beispielsweise halogenhaltigen Verbindungen sowie Stickstoff- und Phosphorverbindungen. Je höher der Isocyanurat-Anteil im Schaumstoff desto weniger Flammschutzmittel muss im Normalfall eingesetzt werden, um ein gegebenes Ziel in Flammschutztests zu erreichen. Ein hoher Isocyanurat-Anteil führt aber auch zu erheblicher Sprödigkeit, verbunden mit Defiziten bei der Elastizität und der Haftfestigkeit zu Deckschichten. Oft werden zur Verringerung von Sprödigkeit weichmachende Polyether in der Rezeptur berücksichtigt. Solche Polyether haben jedoch oft negativen Einfluss auf das Verhalten in Tests zur Entflammbarkeit und zum Brandverhalten.

Es besteht daher ein Bedarf an PUR/PIR - Hartschaumstoffen, die beim Verbrennen eine vergleichsweise geringe Wärmentwicklung aufweisen und gleichzeitig wenig spröde sind. Darüber hinaus besteht ein Bedarf für einen Herstellungsprozess für flammgeschützte PUR/PIR-Hartschaumstoffe, der einfach und vergleichsweise kostengünstig ist. Hierfür bieten sich natürlich kostengünstige Edukte an, wobei die mit diesen Edukten erhaltenen PUR/PIR-Hartschaumstoffe zumindest vergleichbare mechanische Eigenschaften wie z.B. Rohdichte und Druckfestigkeit, und zumindest vergleichbare Eigenschaften beim Verbrennen aufweisen, wie solche mit herkömmlichen Edukten oder Verfahren hergestellte PUR/PIR-Hartschaumstoffe.

Die Aufgabe der vorliegenden Erfindung ist es daher, PUR/PIR- Hartschaumstoffe mit einem guten Eigenschaftsprofil, insbesondere guten Elastizitätseigenschaften und Flammwidrigkeit herzustellen. Weiterhin sollen diese PUR/PIR - Hartschaumstoffe möglichst kostengünstig herzustellen sein.

Diese Aufgabe konnte gelöst werden durch ein Verfahren zur Herstellung von PUR/PIR-Hartschaumstoffen umfassend die Umsetzung von

A    einer Isocyanat-reaktive Komponente

B    einer Isocyanat-Komponente

C    chemischen und/oder physikalischen Treibmittel

D    Katalysatoren,

E    gegebenenfalls weiteren Additive wie zum Beispiel Emulgatoren oder Schaumstabilisatoren,

F    gegebenenfalls Flammschutzmittel,

dadurch gekennzeichnet, dass die Isocyanat-reaktive Komponente A ein Polyol A1 enthält und/oder die Isocyanat-Komponente B) ein NCO-terminiertes Prepolymer, erhältlich aus einem Polyisocyanat und einer Polyolzusammensetzung umfassend ein Polyol A1, enthält, und
dadurch gekennzeichnet, dass das Polyetherthiocarbonat-Polyol eine oder mehrere funktionelle Gruppen -O-C(=S)-S- (Etherthiocarbonat-Gruppe) aufweist,
und dass das Reaktionsgemisch aus den Komponenten A bis F einen Isocyanat-Index $\geq$ 140 aufweist.

Im Rahmen der vorliegenden Erfindung handelt es sich bei dem Begriff "Polyol" um ein Hydroxyterminiertes Polymer nach der in der am 1.1.2018 gültigen Definition der Europäischen Chemikalienagentur.

Die zahlengemittelte Molmasse $M_n$ (auch: Molekulargewicht) wird im Rahmen dieser Erfindung bestimmt durch Gelpermeationschromatographie nach DIN 55672-1 vom August 2007.

Die "Hydroxylzahl" gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-2 (1998).

Die "Säurezahl" wird im Rahmen der vorliegenden Erfindung bestimmt nach der Norm DIN EN ISO 2114:2002-06.

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül).

Im Sinne dieser Anmeldung kann es sich bei "einem Polyol" auch um eine Mischung unterschiedlicher Polyole handeln, wobei in diesem Fall die Mischung der Polyole als Gesamtes die genannte Kennzahl (OH-Zahl, Funktionalität) aufweist.

Analog gilt dies für die weiteren hier aufgeführten Polyole und ihre Kennzahlen.

Es wurde überraschend gefunden, dass es mit dem erfindungsgemäßen Verfahren umfassend den Einsatz eines Polyetherthiocarbonat-Polyols (Komponente A1) möglich ist, PUR/PIR-Hartschaumstoffe mit einem besseren mechanischen Eigenschaftsprofil und besseren Brandeigenschaften herzustellen als bei Einsatz des standardmäßig verwendeten Polyetherpolyols.

Komponente A1

Das Polyetherthiocarbonat-Polyol A1 wird bevorzugt mit den anderen Isocyanat-reaktiven Verbindungen der Komponente A gemischt. In einer alternativen Ausführungsform wird A1 zunächst ganz oder teilweise mit Isocyanat zu einem Prepolymer, bevorzugt NCO-terminiertem Prepolymer, umgesetzt.

Der Anteil an Polyol A1 an den Isocyanat-reaktiven Komponenten A beträgt bevorzugt mindestens 4,0, insbesondere 4,0 - 34,0 Gew.-%, und besonders bevorzugt 5,0 -20,0 Gew.-%.

Die Polyetherthiocarbonat-Polyole haben vorzugsweise eine OH-Funktionalität (d.h. durchschnittliche Anzahl von OH-Gruppen pro Molekül), welche mindestens 0,8 beträgt, bevorzugt von 1,0 bis 8,0, besonders bevorzugt von 1 bis 6 und ganz besonders bevorzugt von 1,7 bis 3,3. Bevorzugt weist das Polyetherthiocarbonat-Polyol ein zahlengemitteltes Molekulargewicht nach Norm DIN 55672-1:2016-03 von mindestens 400, beispielsweise von 900 bis 15000 g/mol, bevorzugt von 400 bis 4500 g/mol und ganz besonders bevorzugt von 1500 bis 3200 g/mol.

Bevorzugt ist das Polyetherthiocarbonat-Polyol erhältlich durch oder erhalten durch Umsetzung einer Mischung enthaltend oder bestehend aus einer H-funktionellen Starterverbindung, mindestens einem Alkylenoxid und $CS_2$, wobei der Anteil an $CS_2$ in dieser Mischung 5 bis 15 Gew.-%, bevorzugt 7 bis 12 Gew.-%, besonders bevorzugt 8 bis 10 Gew.-%, beträgt. Bevorzugt ist das Polyetherhiocarbonat-Polyol erhältlich durch oder erhalten durch ein Verfahren, umfassend den Schritt der Reaktion von Kohlenstoffdisulfid und mindestens eines Alkylenoxids in Gegenwart eines Doppelmetallcyanid-Katalysators und mindestens einer H-funktionellen Starterverbindung, wobei der Doppelmetallcyanid - Katalysator bevorzugt vor dem ersten Kontakt mit Kohlenstoffdisulfid zuvor mit mindestens einem Alkylenoxid kontaktiert wurde.

Dadurch, dass der DMC-Katalysator vor dem ersten Kontakt mit $CS_2$ zuvor mit mindestens einem Alkylenoxid kontaktiert wurde, findet eine Aktivierung des Katalysators statt. Während der Aktivierung kann durch eine exotherme chemische Reaktion eine Wärmeentwicklung auftreten, die zu Temperaturspitzen ("Hotspots") führen kann. Im Allgemeinen kann dem Aktivierungsschritt ein Schritt zum Trocknen des DMC-Katalysators und gegebenenfalls der H-funktionellen Starterverbindung bei erhöhter Temperatur und/oder reduziertem Druck, gegebenenfalls unter Durchleiten eines Inertgases durch die Reaktionsmischung, vorgelagert sein.

Allgemein können für die Synthese des Polyetherthiocarbonat-Polyols Alkylenoxide (Epoxide) mit 2-45 Kohlenstoffatomen eingesetzt werden. Bevorzugt wird das Alkylenoxid ausgewählt aus mindestens einer Verbindung der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, Epoxide von C6-C22 $\alpha$-Olefinen, wie 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Cyclopentenoxid, Cyclohexenoxid, Cycloheptenoxid, Cyclooctenoxid, Styroloxid, Methylstyroloxid, Pinenoxid, Allylglycidylether, Vinylcyclohexenoxid, Cyclooctadienmonoepoxid, Cyclododecatrienmono-epoxid, Butadienmonoepoxid, Isoprenmonoepoxid, Limonenoxid, 1,4-Divinylbenzolmonoepoxid, 1,3-Divinylbenzolmonoepoxid, Glycidylacrylat und Glycidylmethacrylat ein- oder mehrfach epoxidierte Fette als Mono-, Di- und Triglyceride, epoxidierte Fettsäuren, C1-C24-Ester epoxidierter Fettsäuren, Epichlorhydrin, Glycidol, und Derivate des Glycidols wie beispielsweise Glycidylether von C1-C22 Alkanolen, Glycidylester von C1-C22 Alkancarbonsäuren. Beispiele für Derivate des Glycidols sind Phenylglycidylether, Kresylglycidylether, Methylglycidylether, Ethylglycidylether und 2-Ethylhexylglycidylether sowie epoxidfunktionelle Alkoxysilane wie beispielsweise 3-Glycidyloxypropyltrimethoxysilan, 3-Glycidyloxypropyltriethoxysilan, 3-Glycidyloxypropyltri-propoxysilan, 3-Glycidyloxypropyl-methyl-dimethoxysilan, 3-Glycidyloxypropyl-ethyldiethoxysilan und 3-Glycidyloxypropyltrlisopropoxysilan. Bevorzugt ist Propylenoxid als Alkylenoxid bei der Herstellung des Polyetherthiocarbonat-Polyols.

Als geeignete H-funktionelle Starterverbindungen die Synthese des Polyetherthiocarbonat-Polyols, auch als Starter bezeichnet, können Verbindungen mit für die Alkoxylierung aktiven H-Atomen eingesetzt werden. Für die Alkoxylierung aktive Gruppen mit aktiven H-Atomen sind beispielsweise -OH, -NH2 (primäre Amine), -NH- (sekundäre Amine), -SH und -CO2H, bevorzugt sind -OH und -NH2, besonders bevorzugt ist -OH. Als H-funktionelle Starterverbindung können beispielsweise mindestens eine Verbindung ausgewählt werden aus der Gruppe bestehend aus ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, polymere Formaldehydverbindungen, Polyethylenimine, Polyetheramine (z.B. sogenannte Jeffamine® von Huntsman, wie z.B. D-230, D-400, D-2000, T-403, T-3000, T-5000 oder entsprechende Produkte der BASF, wie z.B. Polyetheramin D230, D400, D200, T403, T5000), Polytetrahydrofurane (z.B. PolyTHF® der BASF, wie z.B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten. Beispielhaft handelt es sich bei den C1-C23 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propargylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-l-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Starterverbindung geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Starterverbindungen können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Covestro AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Starterverbindungen können auch aus der Substanzklasse der Polyesterpolyole ausgewählt sein, insbesondere solchen mit einem Molekulargewicht Mn im Bereich von 200 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Starterverbindungen zur Herstellung der Polyethercarbonatpolyole dienen können. Bevorzugt werden Polyetherpolyole mit $M_n$ = 150 bis 2000 g/mol zur Herstellung der Polyesteretherpolyole eingesetzt.

Des Weiteren können als H-funktionelle Starterverbindungen Polycarbonatdiole eingesetzt werden, insbesondere solche mit einem Molekulargewicht $M_n$ im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der Covestro AG verwendet werden, wie z.B. Desmophen® C 1100 oder Desmophen® C 2200.

Bevorzugt können Polyethercarbonatpolyole, Polycarbonatpolyole und/oder Polyetherestercarbonatpolyole als H-funktionelle Starterverbindungen eingesetzt werden. Insbesondere können Polyethercarbonatpolyole, Polycarbonatpolyole und/oder Polyetherestercarbonatpolyole durch Umsetzung von Alkylenoxiden, bevorzugt Ethylenoxid, Propylenoxid oder deren Mischungen, optional weiterer Co-Monomeren mit $CO_2$ in Gegenwart einer weiteren H-funktionellen Starterverbindung und unter Verwendung von Katalysatoren erhalten werden. Diese Katalysatoren umfassen Doppelmetallcyanid-Katalysatoren (DMC-Katalysatoren) und/oder Metallkomplexkatalysatoren beispielsweise auf Basis der Metalle Zink und/oder Kobalt, wie beispielsweise Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284) und sogenannte Kobalt-Salen-Katalysatoren (beschrieben z.B. in US 7,304,172 B2, US 2012/0165549 A1) und/oder Mangan-Salen Komplexe. Eine Übersicht über die bekannten Katalysatoren für die Copolymerisation von Alkylenoxiden und $CO_2$ gibt zum Beispiel Chemical Communications 47(2011)141-163. Durch die Verwendung unterschiedlicher Katalysatorsysteme, Reaktionsbedingungen und/oder reaktionssequenzen erfolgt hierbei die Bildung von statistischen, alternierenden, blockartigen oder gradientenartigen Polyethercarbonatpolyole, Polycarbonatpoylole und/oder Polyetherestercarbonatpolyole. Diese als H-funktionelle Starterverbindungen eingesetzten Polyethercarbonatpolyole, Polycarbonatpoylole und/oder Polyetherestercarbonatpolyole können hierzu in einem separaten Reaktionsschritt zuvor hergestellt werden.

Die H-funktionellen Starterverbindungen weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die H-funktionellen Starterverbindungen werden entweder einzeln oder als Gemisch aus mindestens zwei H-funktionellen Starterverbindungen eingesetzt.

Bevorzugte H-funktionelle Starterverbindungen sind Alkohole mit einer Zusammensetzung nach der allgemeinen Formel (I),

$$HO-(CH_2)X-OH \qquad (I)$$

wobei x eine Zahl von 1 bis 20, bevorzugt eine gerade Zahl von 2 bis 20 ist. Beispiele für Alkohole gemäß Formel (I) sind Ethylenglycol, 1,4-Butandiol, 1,6-Hexandiol, 1,8-Octandiol, 1,10 Decandiol und 1,12-Dodecandiol. Weitere bevorzugte H-funktionelle Starterverbindungen sind Neopentylglykol, Trimethylolpropan, Glycerin, Pentaerythrit, Umsetzungsprodukte der Alkohole gemäß Formel (VII) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Starterverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Starterverbindungen um mindestens eine Verbindung ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Starterverbindung und Propylenoxid bzw. einer di- oder tri-H-funktionellen Starterverbindung, Propylenoxid und Ethylenoxid aufgebaut ist. Die Polyetherpolyole haben bevorzugt eine OH-Funktionalität von 2 bis 4 und ein Molekulargewicht $M_n$ im Bereich von 62 bis 8000 g/mol, bevorzugt ein Molekulargewicht und mehr bevorzugt von ≥ 92 g/mol bis ≤ 2000 g/mol.

Als Katalysator für die Herstellung der Polyethercarbonatpolyole kann beispielsweise ein DMC-Katalysator (Doppel-Metall-Cyanid-Katalysator) eingesetzt werden. Es können zusätzlich oder alternativ auch andere Katalysatoren eingesetzt werden. Die vorzugsweise einsetzbaren DMC-Katalysatoren enthaltenen Doppelmetallcyanid-Verbindungen sind die Reaktionsprodukte wasserlöslicher Metallsalze und wasserlöslicher Metallcyanidsalze. Doppelmetallcyanid (DMC)-Katalysatoren zur Verwendung in der Homopolymerisation von Alkylenoxiden sind im Prinzip aus dem Stand der Technik bekannt. Bevorzugt enthält der Katalysator Kobalt und Zink.

Bei der Synthese von Polyetherthiocarbonat-Polyols kann als weiteres Produkt, eigentlich Nebenprodukt, ein cyclisches Carbonat entstehen (beispielsweise für X = S, R = CH$_3$ Propylenthiocarbonat). Daher wird ein Polyetherthiocarbonat-Polyol bevorzugt 0,01 bis 10 mol.-%, bevorzugter 0,1 bis 5 mol.-%, noch bevorzugter 0,1 bis 3 mol.-%, jeweils bezogen auf das Polyetherthiocarbonat-Polyol an cyclischem Carbonat enthalten.

Komponenten A2

Die isocyanat-reaktive Komponente A umfasst bevorzugt neben A1 weitere isocyanat-reaktive Komponenten (A2). Bevorzugt handelt es sich dabei um mindestens ein Polyol ausgewählt aus der Gruppe bestehend aus Polyesterpolyolen, Polyetherpolyolen, Polycarbonatpolyolen, Polyether-Polycarbonatpolyolen und Polyetheresterpolyolen.

In einer bevorzugten Ausführungsform enthält die Komponente A2 eine oder mehrere Verbindungen ausgewählt aus der Gruppe bestehend aus Polyesterpolyolen und Polyetheresterpolyolen (Polyolkomponente A2a). Der Anteil an Polyolkomponente A2a beträgt, bezogen auf das Gesamtgewicht der Isocyanat-reaktiven Komponenten A) 50-96 Gew-% und bevorzugt 80-95 Gew.-%.

Geeignete Polyesterpolyole sind unter anderem Polykondensate aus Di- sowie weiterhin Tri- und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykole, weiterhin 1,2-Propandiol, 1,3-Propandiol, 1,3- und 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden. Es können zusätzlich auch einwertige Alkanole mit verwendet werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Bernsteinsäure, 3,3-Diethylglutarsäure, 2,2-Dimethylbernsteinsäure, Dodekandisäure, Endomethylen-tetrahydrophthalsäure, Dimerfettsäure, Trimerfettsäure, Zitronensäure, oder Trimellithsäure eingesetzt werden. In bestimmten Ausführungsformen ist der Einsatz von Polyestern enthaltend aliphatische Dicarbonsäuren (z.B. Glutarsäure, Adipinsäure, Bernsteinsäure) bevorzugt, insbesondere der Einsatz von rein aliphatischen Polyestern (ohne aromatische Gruppen). Als Säurequelle können auch die entsprechenden Anhydride verwendet werden. Es können zusätzlich auch Monocarbonsäuren wie Benzoesäure und Alkancarbonsäuren mitverwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierten Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Die Polyesterpolyole weisen bevorzugt eine Säurezahl 0 - 5 mg KOH/g auf. Dies stellt sicher, dass eine Blockade aminischer Katalysatoren durch Überführung in Ammoniumsalze nur begrenzt erfolgt und die Reaktionskinetik der Schäumreaktion wenig beeinträchtigt wird.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit $\geq$ 4 bis $\leq$ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit $\geq$ 1 bis $\leq$ 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten. Startermoleküle sind zum Beispiel Diole mit zahlenmittleren Molekulargewichten $M_n$ von vorzugsweise $\geq 18$ g/mol bis $\leq 400$ g/mol, bevorzugt von $\geq 62$ g/mol bis $\leq 200$ g/mol wie 1,2-Ethandiol, 1,3-Propandiol, 1,2-Propandiol, 1,4-Butandiol, 1,5-Pentendiol, 1,5-Pentandiol, Neopentylglykol, 1,6-Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, Isosorbit, Cyclohexandimethanol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden. Neben den Diolen können als Startermoleküle für die Herstellung der Polyether auch Verbindungen mit > 2 zerewitinoff-aktiven Wasserstoffen, besonders mit zahlenmittleren Funktionalitäten von > 2 bis $\leq 8$, insbesondere von $\geq 3$ bis $\leq 6$ mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molmassen Mn von vorzugsweise $\geq 62$ g/mol bis $\leq 400$ g/mol, insbesondere von $\geq 92$ g/mol bis $\leq 200$ g/mol. Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Herstellungsverfahren der Polyole sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben worden. Es ist auch möglich, Polyester- und Polyetherpolyole über Glykolyse von geeigneten Polymer-Rezyklaten zu gewinnen. Geeignete Polyether-Polycarbonatpolyole und ihre Herstellung werden beispielsweise in der EP 2910585 A, [0024] - [0041], beschrieben. Beispiele zu Polycarbonatpolyolen und ihre Herstellung finden sich unter anderem in der EP 1359177 A. Die Herstellung geeigneter Polyetheresterpolyole ist unter anderem in der WO 2010/043624 A und in der EP 1 923 417 A beschrieben.

Bevorzugt sind in A2 Polyesterpolyole und/oder Polyetheresterpolyole enthalten, welche Funktionalitäten von $\geq 1,2$ bis $\leq 3,5$, insbesondere $\geq 1,6$ bis $\leq 2,4$ und eine Hydroxylzahl zwischen 100 bis 300 mg KOH/g, besonders bevorzugt 150 bis 270 mg KOH/g und insbesondere bevorzugt von 160 - 260 mg KOH/g, aufweisen. Vorzugsweise besitzen die Polyesterpolyole und Polyetheresterpolyole mehr als 70 mol%, bevorzugt mehr als 80 mol%, insbesondere mehr als 90 mol%, primäre OH-Gruppen.

Weiterhin können in der Isocyanat-reaktiven Komponente A2 auch andere Isocyanat-reaktive Komponenten A2b zum Einsatz kommen.

In der Komponente A2b werden insbesondere weitere Polyole ausgewählt aus der Gruppe bestehend aus Polyetherpolyolen, Polycarbonatpolyolen und Polyethercarbonatpolyolen eingesetzt. Z.B. wird neben den einen oder mehreren Polyolen A2a auch ein oder mehrere Polyetherpolyole eingesetzt, wodurch noch Eigenschaften wie die Fließfähigkeit des Reaktionsgemisches und die Emulgierfähigkeit der treibmittelhaltigen Formulierung, die Verbesserung der Haftung und Dimensionsstabilität des resultierenden Schaumes eingestellt werden können.

Bei den verwendeten Polyetherpolyolen handelt es sich um die dem Fachmann bekannten, in der Polyurethansynthese einsetzbaren Polyetherpolyole.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxid und/oder Epichlorhydrin an di- oder polyfunktionelle Startermoleküle. Insbesondere bevorzugt ist die Addition von Ethylenoxid und Propylenoxid. Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Diaminotoluol, Triethanolamin, Bisphenole, insbesondere 4,4'-Methylenbisphenol, 4,4'-(1-Methylethyliden)bisphenol, Resole, Novolake,1,4-Butandiol, 1,6-Hexandiol sowie niedermolekulare, Hydroxylgruppen aufweisende Ester derartiger Polyole mit Dicarbonsäuren sowie Oligoether derartiger Polyole.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenole und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Daneben können in der Isocyanat-reaktiven Komponente A2b neben den beschriebenen Polyolen weitere Isocyanat-reaktive Verbindungen enthalten sein, insbesondere Polyamine, Polyole, Polyaminoalkohole und Polythiole. Selbstverständlich umfassen die beschriebenen Isocyanat-reaktiven Komponenten auch solche Verbindungen mit gemischten Funktionalitäten.

In bevorzugten Ausführungsformen der Komponente A2b sind in dieser auch niedermolekulare Isocyanat-reaktive Verbindungen enthalten, insbesondere di- oder trifunktionelle Amine und Alkohole, besonders bevorzugt Diole und/oder Triole mit Molmassen $M_n$ kleiner als 400 g/mol, vorzugsweise von 60 bis 300 g/mol. Zum Einsatz kommen z.B. Triethanolamin, Diethylenglykol, Ethylenglykol, Glycerin sowie niedermolekulare Ester oder Halbester dieser Alkohole, z.B. der Halbester von Phthalsäureanhydrid und Diethylenglykol. Falls zur Herstellung der PUR/PIR-Hartschaumstoffe solche niedermolekularen Isocyanat-reaktiven Verbindungen Anwendung finden, z.B. in der Funktion als Kettenverlängerungsmittel und/oder Vernetzungsmittel, kommen diese zweckmäßigerweise in einer Menge von maximal 5 Gew.-%, bezogen auf das Gesamtgewicht der Komponente A, zum Einsatz.

Eine bevorzugte Polyolkomponente A für die mit diesem Verfahren hergestellten Schäume enthält 50,0 bis 96,0 Gew.-%, bevorzugt 55.0 - 95,0 Gew.-%, der Polyolkomponente A2a, welche ausgewählt ist aus einer oder mehreren Polyolen der Gruppe bestehend aus Polyesterpolyolen und Polyetheresterpolyolen in einem Hydroxylzahlbereich zwischen 160 bis 310 mg KOH/g und mit Funktionalitäten von ≥ 1,2 bis ≤ 3,5, insbesondere ≥1,6 bis ≤ 2,4, und 4,0 - 34,0 Gew.-% eines Polyetherthiocarbonatpolyols mit einer Funktionalität von ≥1,7 bis ≤ 3,3, und einer Hydroxylzahl von 20 bis 450 mg KOH/g.

Komponente B)Die Komponente B) ist vorzugsweise ein Polyisocyanat mit einer NCO-Funktionalität von ≥ 2. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe, 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

Als Komponente B werden bevorzugt Mischungen der Isomeren des Diphenylmethandiisocyanats ("monomeres MDI", abgekürzt "mMDI") und dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenyl-polymethylenpolyisocyanate, d.h. Gemische der höherkernigen Homologen des Diphenyl-methylendiisocyanates, welche eine NCO - Funktionalität f > 2 aufweisen und sich durch folgende Summenformel beschreiben lassen: $C_{15}H_{10}N_2O_2[C_8H_5NO]_n$, wobei n = ganze Zahl > 0, bevorzugt n = 1, 2, 3 und 4, ist. Höherkernige Homologe $C_{15}H_{10}N_2O_2[C_8H_5NO]_m$, m = ganze Zahl ≥ 4) können ebenfalls im Gemisch aus organischen Polyisocyanaten enthalten sein. Als Komponente B weiterhin bevorzugt sind Mischungen aus mMDI und/oder pMDI mit maximal bis zu 20 Gew.-%, mehr bevorzugt maximal 10 Gew.-% an weiteren, für die Herstellung von Polyurethanen bekannten aliphatischen, cycloaliphatischen und insbesondere aromatischen Polyisocyanaten, ganz besonders Toluylendiisocyanat (TDI).

Die Komponente B zeichnet sich weiterhin dadurch aus, dass sie vorzugsweise Polyisocyanate mit einer Funktionalität von mindestens 2, insbesondere mindestens 2,2, besonders bevorzugt mindestens 2,4, und ganz besonders bevorzugt mindestens 2,7 umfasst.

In der Komponente B werden für das Anwendungsgebiet "Polyurethan-Hartschaum" polymere MDI-Typen enthaltend überwiegend (z.B. > 50 Gew.-%) oligomeres MDI besonders bevorzugt.

Der NCO-Gehalt der Komponente B beträgt bevorzugt von ≥ 24,0 Gew.-% bis ≤ 33,0 Gew.%, und weist bevorzugt eine Viskosität bei 25 °C von ≥ 80 mPas bis ≤ 2900 mPas, besonders bevorzugt von ≥ 95 mPas bis ≤ 850 mPas bei 25°C auf.

Der NCO-Wert (auch: NCO-Gehalt, Isocyanatgehalt) wird bestimmt mittels EN ISO 11909:2007. Falls nicht anders angegeben, handelt es sich um die Werte bei 25°C.

Bei Angaben zur Viskosität handelt es sich um die dynamische Viskosität, bestimmt mittels DIN EN ISO 3219:1994-10 "Kunststoffe - Polymere/Harze in flüssigem, emulgiertem oder dispergiertem Zustand".

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Bei der Isocyanat-Komponente kann es sich auch um ein NCO-terminiertes Prepolymer handeln. Die Prepolymere sind herstellbar durch Umsetzung eines oder mehrerer der oben beschriebenen Polyisocyanate mit einem oder mehreren Polyolen, entsprechend den unter den Komponenten beschriebenen Polyolen. Das so hergestellte NCO-Prepolymere kann dann wiederum als eine Isocyanat-Komponente aufgefasst werden, welche als Teil oder als gesamte Komponente B in dem erfindungsgemäßen Verfahren eingesetzt wird.

In einer Ausführungsform des erfindungsgemäßen Verfahrens enthält die Komponente B ein NCO-Prepolymer oder besteht daraus, welches erhältlich ist durch Reaktion eines Isocyanats mit einer NCO-Funktionalität von $\geq 2$ und Polyolen mit einem Molmasse $M_n$ von $\geq 62$ g/mol bis $\leq 8000$ g/mol und OH-Funktionalitäten von $\geq 1,5$ bis $\leq 6,0$.

In einer weiteren Ausführungsform des erfindungsgemäßen Verfahrens enthält die Komponente B ein Prepolymer oder besteht daraus, welches erhältlich ist durch Umsetzung von Polyetherthiocarbonat-Polyol (gemäß der oben bei Komponente A1 gegebenen Definition).

Aus Komponente A und Komponente B wird durch einstufige oder mehrstufige Mischung ein Reaktionsgemisch erzeugt, welche zu dem PUR/PIR-Hartschaum führt. Die Herstellung erfolgt im Allgemeinen über Vermischung aller Komponenten über übliche Hoch- oder Niederdruckmischköpfe.

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$\text{Kennzahl} = (\text{Mole Isocyanat-Gruppen} / \text{Mole Isocyanat-reaktive Gruppen}) * 100$$

Im Reaktionsgemisch werden die Anzahl der NCO-Gruppen im Isocyanat und die Anzahl der gegenüber Isocyanaten reaktiven Gruppen so eingestellt, dass sie zu einer Kennzahl (Index) von 150 bis 600 führen. Die Kennzahl liegt bevorzugt in einem Bereich von > 180 bis < 450, ganz besonders bevorzugt von $\geq 300$ bis $\leq 400$.

Treibmittel C

Das Reaktionsgemisch enthält weiterhin so viel Treibmittel C wie zur Erzielung einer dimensionsstabilen Schaummatrix und der gewünschten Rohdichte nötig ist. In der Regel sind dies 0,5 - 30,0 Gewichtsteile Treibmittel bezogen auf 100,0 Gewichtsteile der Komponente B. Als Treibmittel werden vorzugsweise physikalische Treibmittel ausgewählt aus wenigstens einem Mitglied der Gruppe bestehend aus Kohlenwasserstoffen, halogenierten Ethern und perfluorierten und teilfluorierten Kohlenwasserstoffen mit 1 bis 8 Kohlenstoffatomen eingesetzt. Unter "physikalischen Treibmitteln" werden im Rahmen der vorliegenden Erfindung solche Verbindungen verstanden, die aufgrund ihrer physikalischen Eigenschaften leicht flüchtig sind und nicht mit der Polyisocyanatkomponente reagieren. Bevorzugt sind die erfindungsgemäß einzusetzenden physikalischen Treibmittel ausgewählt aus Kohlenwasserstoffen (z. B. n-Pentan, iso-Pentan, cyclo-Pentan, Butan, Isobutan, Propan), Ethern (z. B. Methylal), halogenierten Ethern, (per)fluorierte Kohlenwasserstoffe mit 1 bis 8 Kohlenstoffatomen (z. B. Perfluorhexan), sowie deren Gemischen untereinander. Auch bevorzugt ist der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en), sowie der Einsatz von Kombinationen dieser Treibmittel. In besonders bevorzugten Ausführungsformen wird als Treibmittel C) ein Pentanisomer oder ein Gemisch verschiedener Pentanisomeren eingesetzt. Außerordentlich besonders bevorzugt wird eine Mischung aus Cyclopentan und Isopentan als Treibmittel C) eingesetzt. Weitere Beispiele für bevorzugt eingesetzte Fluorkohlenwasserstoffe sind z.B. HFC 245fa (1,1,1,3,3-Pentafluorpropan), HFC 365mfc (1,1,1,3,3-Pentafluorbutan), HFC 134a oder deren Mischungen verwendet. Es können auch verschiedene Treibmittelklassen kombiniert werden.

Insbesondere bevorzugt ist auch der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4oder2)-(trifluormethyl)pent-2-en und/oder 1,1,1,3,4,4,5,5,5- Nonafluor-4(oder2)-(trifluormethyl)pent-2-en), allein oder in Kombination mit anderen Treibmitteln. Diese haben den Vorteil, ein besonders niedriges Ozonabbaupotential (ODP) aufzuweisen und ein besonders niedriges Treibhauspotential (GWP) zu besitzen.

Zusätzlich oder auch statt der oben aufgeführten physikalischen Treibmittel können auch chemische Treibmittel (auch "Co-Treibmittel") verwendet werden. Bei diesen handelt es sich besonders bevorzugt um Wasser, Carbamate und / oder Ameisensäure. Vorzugsweise werden die chemischen Treibmittel zusammen mit physikalischen Treibmitteln verwendet. Bevorzugt werden die Co-Treibmittel in einer Menge bis 6 Gew.-%, besonders bevorzugt 0,5 bis 4 Gew.-% für die Verbundelemente, bezogen auf die Gesamtmenge an Verbindungen mit gegenüber Isocyanatgruppen reaktiven Wasserstoffatomen in der Komponente A.

Katalysatorkomponente D)

Das Reaktionsgemisch enthält weiterhin gegebenenfalls D) eine Katalysatorkomponente, welche geeignet ist, die Treibreaktion, die Urethanreaktion und / oder die Isocyanuratreaktion (Trimerisierung) zu katalysieren. Die Katalysatorkomponenten können dem Reaktionsgemisch zudosiert oder auch ganz oder teilweise in der Isocyanat-reaktiven Komponente A) vorgelegt werden.

Hierfür geeignet sind insbesondere eine oder mehrere katalytisch aktive Verbindungen ausgewählt aus den folgenden Gruppen:

D1) Aminische Katalysatoren, z.B. Amidine, wie 2,3-Dimethyl-3,4,5,6-tetrahydropyrimidin, tertiäre Amine, wie Triethylamin, Tributylamin, Dimethylcyclohexylamin, Dimethylbenzylamin, N-Methyl-, N-Ethyl-, N-Cyclohexylmorpholin, N,N,N',N'- Tetramethylethylendiamin, N,N,N',N'-Tetramethylbutandiamin, N,N,N',N'-Tetramethylhexandiamin-1,6, Pentamethyldiethylentriamin, Bis(2-dimethylaminoethyl)ether, Bis-(dimethylaminopropyl)-harnstoff, Dimethylpiperazin, 1,2-Dimethyl-imidazol, N,N',N''-Tris-(dimethylaminopropyl)hexahydrotriazin, Bis[2-(N,N-dimethylamino)ethyl]ether, 1-Aza-bicyclo-(3,3,0)-octan und 1,4-Diaza-bi-cyclo-(2,2,2)-octan, und Alkanolaminverbindungen, wie Triethanolamin, Triisopropanolamin, N-Methyl- und N-Ethyl-diethanolamin, N,N-Dimethylaminoethoxyethanol, N,N,N'-Trimethylaminoethyl-ethanolamin und Dimethylethanolamin. Besonders geeignete Verbindungen sind ausgewählt aus der Gruppe umfassend tertiäre Amine, wie Triethylamin, Tributylamin, Dimethylcyclohexylamin, Dimethylbenzylamin, N,N,N',N'- Tetramethylethylendiamin, Pentamethyldiethylentriamin, Bis(2-dimethylaminoethyl)ether, Dimethylpiperazin, 1,2-Dimethyl-imidazol und Alkanolaminverbindungen, wie Tris(dimethylaminomethyl)phenol, Triethanolamin, Triisopropanolamin, N-Methyl- und N-Ethyl-diethanolamin, N,N-Dimethylaminoethoxyethanol, N,N,N'-Trimethylaminoethyl-ethanolamin und Dimethylethanolamin,

In einer besonders bevorzugten Ausführungsform werden in der Katalysatorkomponente ein oder mehrere aminische Verbindungen gemäß folgender Struktur eingesetzt:

$$(CH_3)_2N\text{-}CH_2\text{-}CH_2\text{-}X\text{-}CH_2\text{-}CH_2\text{-}Y$$

wobei Y = $NR_2$ oder OH, vorzugsweise Y = $N(CH_3)_2$ oder OH, besonders bevorzugt Y = $N(CH_3)_2$ und wobei X= NR oder O, vorzugsweise X= N-$CH_3$ oder O, besonders bevorzugt X= N-$CH_3$. Dabei ist jedes R unabhängig von jedem anderen R wählbar und stellt einen beliebig aufgebauten organischen Rest mit mindestens einem C-Atom dar. Vorzugsweise ist R eine Alkylgruppe mit 1 bis 12 C-Atomen, insbesondere C1- bis C6-Alkyl, besonders bevorzugt Methyl und Ethyl, insbesondere Methyl.

D2) Carboxylate von Alkali- oder Erdalkalimetallen, insbesondere Natriumacetat, Natriumoctoat, Kaliumacetat, Kaliumoctoat, sowie Zinncarboxylate, z.B.. Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat und Dioctylzinndiacetat. und Ammoniumcarboxylate. Insbesondere bevorzugt sind Natrium-, Kalium- und Ammoniumcarboxylate. Bevorzugte Carboxylate sind Formiate, Ethylhexanoate (=Octoate) und Acetate.

Bevorzugt enthält der Katalysator einen oder mehrere Katalysatoren ausgewählt aus der Gruppe bestehend aus Kaliumacetat, Kaliumoctoat, Pentamethyldiethylentriamin, N,N',N''-Tris-(dimethylaminopropyl)hexahydrotriazin, Tris(dimethylaminomethyl)phenol, Bis [2-(N,N-dimethylamino)ethyl] ether und N,N-Dimethylcyclohexylamin, besonders bevorzugt aus Pentamethyldiethylentriamin, N,N',N''-Tris-(dimethylaminopropyl)hexahydrotriazin und N,N-Dimethylcyclohexylamin, besonders besonders bevorzugt aus Pentamethyldiethylentriamin, N,N',N''-Tris-(dimethylaminopropyl)hexahydrotriazin und N,N-Dimethylcyclohexylamin in Kombination mit Kaliumacetat, Kaliumoctoat oder Kaliumformiat oder Natriumformiat.

Das Reaktionsgemisch kann Hilfs- und Zusatzstoffe E) enthalten. Diese können ganz oder teilweise der Isocyanat-reaktiven Komponente A) zugegeben werden oder direkt der Mischung der Komponenten zudosiert werden.

Bevorzugt umfassen die Hilfs- und Zusatzstoffe E) Emulgatoren. Als geeignete Emulgatoren, die auch als Schaumstabilisatoren dienen, können beispielsweise alle handelsüblichen durch Polyetherseitenketten modifizierten Silikonoligomere eingesetzt werden, die auch zur Herstellung von herkömmlichen Polyurethanschäumen eingesetzt werden. Falls Emulgatoren eingesetzt werden, handelt es sich um Mengen von bevorzugt bis zu 8 Gew.-%, besonders bevorzugt von 0,5 bis 7 Gew.-%, jeweils bezogen auf das Gesamtgewicht der Isocyanat-reaktiven Zusammensetzung. Bevorzugte Emulgatoren sind Polyetherpolysiloxancopolymerisate. Solche sind beispielsweise unter der Bezeichnung B84504 und B8443 der Firma Evonik, Niax L-5111 der Firma Momentive Performance Materials, AK8830 der Firma Maystar sowie Struksilon 8031 der Fa. Schill und Seilacher am Markt erhältlich. Auch silikonfreie Stabilisatoren, wie bspw. das Produkt LK 443 von Air Products, können auch eingesetzt werden.

Weiterhin umfasst die Komponente E) alle Additive mit Ausnahme von Flammschutzmitteln, die üblicherweise PUR/PIR-Formulierungen zugesetzt werden. Beispiele für solche Additive sind Zellregulantien, Thixotropiermittel, Weichmacher und Farbstoffe.

Insbesondere können zur Verbesserung der Brandbeständigkeit dem Reaktionsgemisch auch Flammschutzmittel F) zugesetzt werden. Derartige Flammschutzmittel sind dem Fachmann im Prinzip bekannt und beispielsweise in "Kunststoffhandbuch", Band 7 "Polyurethane", Kapitel 6.1 beschrieben. Dies können beispielsweise halogenierte Polyester und Polyole, brom- und chlorhaltige Paraffine oder Phosphorverbindungen, wie zum Beispiel die Salze der Polyphosphorsäure, Ester der Orthophosphorsäure und der Metaphosphorsäure, die ebenfalls Halogen enthalten können, sein. Bevorzugt werden bei Raumtemperatur flüssige Flammschutzmittel gewählt. Beispiele sind Triethylphosphat, Diethylethanphosphonat, Kresyldiphenylphosphat, Dimethylpropanphosphonat, Dialkylhydroxymethylphosphonate und Tris($\beta$-chlorisopropyl)phosphat. Besonders bevorzugt sind Flammschutzmittel ausgewählt, aus der Gruppe bestehend aus Tris(chloro-2-propyl)-phosphat (TCPP) und Triethylphosphat (TEP) und Mischungen daraus. Bevorzugt werden Flammschutzmittel in einer Menge von 1 bis 30 Gew.-%, besonders bevorzugt 5 bis 30 Gew.- %, bezogen auf das Gesamtgewicht der Isocyanat-reaktiven Zusammensetzung Isocyanat-reaktiven Komponente eingesetzt. Um bestimmte Eigenschaftsprofile (Viskosität, Sprödigkeit, Brennbarkeit, Halogengehalt etc.) zu erzielen, kann es auch günstig sein, unterschiedliche Flammschutzmittel miteinander zu kombinieren. In einer anderen bevorzugten Ausführungsform enthält Flammschutzmittel keine organischen Chlor- oder Bromverbindungen.

In einer weiterhin bevorzugten Ausführungsform enthält das Reaktionsgemisch bis auf technisch unvermeidliche Reste, die aus möglichen Synthesestufen der Einsatzstoffe resultieren, keine organischen Chlor- oder Bromverbindungen.

In einer bevorzugten Ausführungsform werden die Komponenten C - F der isocyanat-reaktiven Komponente A zugegeben.

Ein weiterer Gegenstand der vorliegenden Erfindung ist die Verwendung der erfindungsgemäßen PUR/PIR-Hartschäume zur Herstellung von Dämmplatten und Verbundelementen, insbesondere Metallverbundelementen. Die Herstellung kann kontinuierlich oder diskontinuierlich erfolgen. Der Einsatz von PUR/PIR-Schäumen auf diesen Gebieten ist dem Fachmann grundsätzlich bekannt und wurde schon vielfach beschrieben.

Metallverbundelemente sind Sandwich-Verbundelemente, bestehend aus wenigstens zwei Deckschichten und einer dazwischen liegenden Kernschicht. Im Besonderen bestehen Metall-Schaumstoff-Verbundelemente wenigstens aus zwei Deckschichten aus Metall und einer Kernschicht aus einem Schaumstoff, z.B. einem Polyurethan (PUR)-Hartschaumstoff, bzw. aus einem Polyurethan/Polyisocyanurat (PUR/PIR)-Hartschaumstoff. Derartige Metall-Schaumstoff-Verbundelemente sind aus dem Stand der Technik hinlänglich bekannt und werden auch als Metallverbundelemente bezeichnet. Als Deckschichten werden dabei neben beschichteten Stahlblechen auch Edelstahl-, Kupfer- oder Aluminiumbleche eingesetzt. Zwischen der Kernschicht und den Deckschichten können weitere Schichten vorgesehen sein. Beispielsweise können die Deckschichten, z.B. mit einem Lack, beschichtet werden.

Die Herstellung dieser Metallverbundelemente kann kontinuierlich (bevorzugt) oder diskontinuierlich erfolgen. Vorrichtungen zur kontinuierlichen Herstellung sind z.B. aus DE 1 609 668 A oder DE 1 247 612 A bekannt. Eine kontinuierliche Anwendung erfolgt beim Einsatz von Doppelbandanlagen. Das Reaktionsgemisch wird beim Doppelbandverfahren nach dem Stand der Technik beispielsweise mittels oszillierenden Auftragsvorrichtungen, z.B. Gießharken, oder einer oder mehreren feststehenden Gießvorrichtungen, z.B. mittels Löcher oder andere Bohrungen aufweisenden Gießharken oder mittels Spalten und/oder Schlitze aufweisenden Düsen oder mittels Mehrfingertechnologie, auf die untere Deckschicht aufgetragen. Siehe hierzu beispielsweise die EP 2 216 156 A1, WO 2013/107742 A, WO 2013/107739 A und die WO 2017/021463 A.

Die Erfindung betrifft auch ein Verfahren zur Herstellung von Verbundelementen, wobei ein erfindungsgemäßes Reaktionsgemisch mittels einer Gießvorrichtung auf eine bewegte Deckschicht aufgebracht wird. Daneben betrifft die Erfindung auch ein kontinuierliches oder diskontinuierlich durchgeführtes Verfahren zu Herstellung von PUR/PIR - Hartschaumstoffe.

Als Anwendungsgebiete für die hergestellten Hartschaumstoffe, Formteile, Platten und Verbundsysteme sind insbesondere zu nennen die technische Isolierung von Geräten wie Kühlschränken, Kühltruhen, Kühlgefrierkombinationen und Boilern, Kühlcontainern und Kühlboxen sowie von Rohren. Die Schaumstoffe können als Dämmplatten z. B. für die Isolierung von Dächern, Wänden, Fußböden und Kellerdecken eingesetzt werden. Anwendung von Metallverbundelementen sind ebene oder linierte Wandelemente sowie profilierte Dachelemente für den Industriehallen- und Kühlhausbau ebenso wie für LKW-Aufbauten, Hallentüren oder Transportcontainer.

Die Erfindung betrifft zudem einen Kühlschrank, einen Gefrierschrank oder eine Kühl-Gefrierkombination, umfassend einen erfindungsgemäß erhältlichen PUR/PIR-Hartschaum, wobei die bereitgestellte Form insbesondere ein Gehäuseteil des Kühlschranks, des Gefrierschranks oder der Kühl-Gefrierkombination ist. Die Erfindung soll anhand der nachfolgenden Beispiele und Vergleichsbeispiele näher erläutert werden.

**Beispiele**

Die vorliegende Erfindung wird anhand der nachfolgenden Beispiele weiter erläutert, ohne jedoch darauf beschränkt zu sein.

A1-1 Umsetzungsprodukt einer Mischung aus Propylenglykol als Starter mit einem Gemisch aus $CS_2$ und Propylenoxid. Der Anteil an $CS_2$ in dieser Mischung beträgt 9,5 Gew.-% (7,4 mol-% der Monomere). Das Polyol wird unter Verwendung eines Katalysators hergestellt, der Kobalt und Zink enthält. Die OH-Zahl beträgt 56 mg KOH/g und die Funktionalität 2,0.

A2a-1 Difunktionelles Polyesterpolyol auf Basis von Ethylenglycol, Diethylenglycol, Adipinsäure, Bernsteinsäure und Glutarsäure mit einer OH-Zahl von 216 mg KOH/g

A2b-1 Desmophen® L2830, Difunktionelles Polyether-Polyol, Umsetzungsprodukt aus Propylenglycol mit Propylenoxid und Ethylenoxid, wobei das Ethylenglycol zwei Endblöcke bildet, die zusammen 30 Gew.-% des Molgewichts $M_n$ von 4 kg/mol bilden. Die OH-Zahl beträgt 28 mg KOH/g. Die Nutzung dieses Blockcopolymers zur Herstellung von PIR Schaumstoffen mit besonders niedriger Sprödigkeit wurde in EP1632511 beschreiben.

B-1 Desmodur® 44V70L, Isocyanat mit 31,5 Gew.-% NCO-Gruppen und einer Viskosität von 1,1 Pa*s bei 20°C (Covestro)

C-1 n-Pentan als physikalisches Treibmittel

C-2 Wasser als chemisches Treibmittel

D-1 25 Gew.-% Kaliumacetat in Diethylenglycol

D-2 Cyclohexyldimethylamin als Katalysator

E-1 Tegostab® B8443, Polyether-modifiziertes Oligosiloxan als Schaumstabilisator (Evonik)

F-1 Triethylphosphat als halogenfreies Flammschutzmittel und Weichmacher

- Als Basispolyol 1 wird eine Mischung aus 74,4 Gew.-% A2a-1, 11,8 Gew.-% C-1, 0,8 Gew.-% C-2, 2,4 Gew.-% D-1, 1,6 Gew.-% D-2, 1,9 Gew.-% E-1 und 7,1 Gew.-% F-1 bezeichnet.

- Als Basispolyol 2 wird eine Mischung aus 67,6 Gew.-% A2a-1, 16,9 Gew.-% C-1, 0,9 Gew.-% C-2, 2,9 Gew.-% D-1, 0,9 Gew.-% D-2, 2,3 Gew.-% E-1 und 8,5 Gew.-% F-1 bezeichnet.

Herstellung und Prüfung der PUR/PIR-Hartschaumstoffe

Auf Basis der Polyolkomponenten wurden im Labor PUR/PIR-Hartschaumstoffe durch die Vermischung eines Reaktionsgemisches in einem Pappbecher hergestellt. Dazu wurden der jeweiligen Polyolkomponente das Flammschutzmittel, der Schaumstabilisator, Katalysatoren und n-Pentan als Treibmittel zugesetzt und gerührt. Die erhaltene Mischung wurde mit dem Isocyanat 10 Sekunden mit einem Rührer (Fa. Pendraulik) bei 70 s$^{-1}$ vermischt. Das Reaktionsgemisch wurde in eine Papierform (3 x 3 x 1 dm$^3$) überführt und reagierte darin unter Aufschäumen aus. Die Rezepturen der Versuche sind in Tabelle 1 wiedergegeben.

Die angegebenen Zeiten beziehen sich auf den Zeitpunkt, wenn mit dem Vermischen von Polyolformulierung und Isocyanat begonnen wird. Als Startzeit wird der Zeitpunkt angegeben, bei dem mit geschultem Auge ein Beginn des Schäumvorgangs beobachtet wird. Als Abbindezeit wird der Zeitpunkt angegeben, bei dem ein in das aufschäumende Reaktionsgemisch eingetauchter Holzstab beim Herausziehen Fäden aus Polymer mitzieht.

Die Messung der Rohdichte erfolgt nach der DIN EN ISO 845 (Oktober 2009). Die Messung der Offenzelligkeit erfolgt pyknometrisch mit einem Accupyk®-Messgerät nach DIN 66133. Die Beurteilung von Zähigkeit und Haftung erfolgt durch eine geschulte Mitarbeiterin. Die Druckfestigkeit wird gemessen nach DIN 53421-A (1984). In der folgenden Tabelle werden das Mittel aus den drei Raumrichtungen und die Anisotropie, d. h. das Verhältnis der Druckfestigkeit in Steigrichtung und senkrecht dazu angegeben. Der Zugversuch erfolgt nach DIN 53430 : 09 / 1975. Die Zähigkeit wird angegeben als die Hälfte des Produktes aus Bruchdehnung in % * Zugfestigkeit in MPa.

Tabelle 1: Zusammensetzung der Schaumstoffe

| Beispiel | 1* | 2 | 3* | 4 | |
|---|---|---|---|---|---|
| Basispolyol 1 | 100 | 100 | | | Gew.-Teile |
| Basispolyol 2 | | | 100 | 100 | Gew.-Teile |
| A2b-1 | 12,2 | | 36 | | Gew.-Teile |
| A1-1 | | 12,2 | | 36 | Gew.-Teile |
| B-1 | 187,1 | 189,8 | 195,5 | 195,5 | Gew.-Teile |
| Kennzahl | 335 | 335 | 342 | 328 | |
| Schwefelgehalt | 0 | 3,2 | 0 | 8,7 | g/kg Schaum |
| Startzeit | 8 | 12 | 12 | 15 | Sekunden |
| Abbindezeit = Fadenziehzeit | 35 | 50 | 125 | 120 | Sekunden |
| Kernrohdichte | 39 | 40 | 31 | 33 | kg/m$^3$ |
| Offenzelligkeit | 6 | 6 | 7 | 7 | % |
| Schrumpfung bei 20°C | Keine | Keine | Keine | keine | |
| Haftung zum Papier | gut | gut | gut | gut | |
| Zähigkeit (Kern) | gut | gut | gut | gut | |
| Zähigkeit (Oberfläche) | gut | gut | gut | gut | |
| Druckfestigkeit | 0,23 | 0,24 | 0,15 | 0,15 | MPa |
| Anisotropie | 2,3 | 2,4 | 2,5 | 1,9 | |
| Zug-E-Modul | 7,0 | 7,6 | 4,8 | 5,3 | MPa |
| Zugfestigkeit beim Bruch | 0,22 | 0,28 | 0,11 | 0,18 | MPa |
| Dehnung beim Bruch | 4,8 | 5,7 | 2,7 | 4,9 | % |
| Zähigkeit | 10 | 16 | 3 | 9 | kPa |
| Dynamisch-Mechanische Analyse (DMA) nach DIN EN ISO 6721 B:1996-12 | | | | | |
| Max. Verlustmodul | 202 / 70 | 210 / 75 | 138 / 70 | 149 / 67 | kPa / °C |
| Max. Verlustfaktor tan | 9,3 / 160 | 9,2 / 185 | 9,5 / 200 | 9,8 / 200 | % / °C |
| Speichermodul (25°C) | 4,05 | 4,03 | 2,65 | 2,78 | MPa |
| Verlustmodul (25°C) | 0,14 | 0,15 | 0,11 | 0,12 | MPa |
| Speichermodul (230°C) | 1,13 | 1,28 | 0,57 | 0,49 | MPa |
| Verlustmodul (230°C) | 76 | 84 | 51 | 38 | MPa |
| Mit * gekennzeichnete Versuche sind Vergleichsversuche | | | | | |

Die Rohdichten der Schaumstoffe aus den Beispielen 1* und 2 liegen im typischen Bereich für Metallverbundelemente. Die Rohdichten der Schaumstoffe 3* und 4 liegen im typischen Bereich für Dämmplatten. Die Offenzelligkeiten entsprechen den Anforderungen für Dämmstoffe im deutschen Bauwesen. Die mechanischen Daten belegen, dass die erfindungsgemäßen Schaumstoffe den Schaumstoffen nach dem Stand der Technik bei Druckfestigkeit und Torsion vergleichbar sind, aber im Zugversuch eine günstigere Elastizität, Festigkeit und Zähigkeit aufweisen.

Tabelle 2: Brandverhalten im Cone Calorimeter ISO 5660-1

Beim Test nach der ISO-Norm 5660-1 (März 2015) werden Probenkörper von 1 dm x 1 dm x 0,3 dm 20 min lang durch einen Wärmestrahler mit einer Bestrahlungsstärke von 50 kW/m$^2$ bestrahlt. THR ist die gesamte normgerecht freigesetzte Wärme. TML ist die Differenz zwischen der in den Versuch eingesetzten Schaumstoffmasse und der Masse des verkohlten Rückstands nach der Prüfung. $HRR_{av}$ ist die mittlere Wärmefreisetzungsrate. Alle Angaben sind Mittelwerte aus zwei Messungen.

Die Polyether A1-1 und A2b-1 haben die gleiche theoretische Verbrennungsenthalpie, berechnet aus dem stöchiometrischen Sauerstoffverbrauch bei der Verbrennung zu Wasser, $CO_2$ und $SO_2$:

|  |  | Sauerstoffverbrauch kg $O_2$/kg Polyol |
|---|---|---|
| A1-1 | $C_{2,7}H_{5,4}O + 3{,}55\,O_2 \rightarrow 2{,}7\,CO_2 + 2{,}7\,H_2O$ | 2,1 |
| A2b-1 | $C_{2,8}H_{5,4}O_{0,9}S_{0,1} + 3{,}71\,O_2 \rightarrow 2{,}8\,CO_2 + 2{,}7\,H_2O + 0{,}1\,SO_2$ | 2,1 |

Ein Unterschied in der Gesamtwärmefreisetzung ist zunächst nicht zu erwarten.

| Beispiel | 1* | 2 | 3* | 4 |  |
|---|---|---|---|---|---|
| $HRR_{av}$ | 24 | 22 | 22 | 21 | kW/m$^2$ |
| THR | 14,0 | 13,0 | 13,3 | 12,5 | MJ/m$^2$ |
| TML | 73 | 67 | 75 | 72 | % |
| THR/TML | 1,9 | 1,75 | 2,1 | 2,1 |  |
| Mass loss rate | 15,4 | 14,2 | 17,4 | 15,4 | mg/s |
| Mit * gekennzeichnete Versuche sind Vergleichsversuche | | | | | |

Der Austausch des Polyether-Polyols A2b-1 durch das Thiocarbonat-modifizierte-Polyol A1-1 in der Isocyanatreaktiven Komponente verbessert überraschenderweise das Brandverhalten bezüglich der mittleren Wärmefreisetzung und der gesamten Wärmefreisetzung. Der Schwefelgehalt reduziert zudem die Intensität des Brennens: pro Zeiteinheit geht weniger Masse verloren.

**Patentansprüche**

1. Verfahren zur Herstellung von PUR/PIR-Hartschaumstoffen umfassend die Umsetzung von

    A einer Isocyanat-reaktive Komponente
    B einer Isocyanat-Komponente
    C chemischen und/oder physikalischen Treibmittel
    D Katalysatoren,
    E gegebenenfalls weitere Additive wie zum Beispiel Emulgatoren oder Schaumstabilisatoren,
    F gegebenenfalls Flammschutzmittel,

    **dadurch gekennzeichnet,**
    **dass** die Isocyanat-reaktive Komponente A ein Polyol A1 enthält und/oder
    die Isocyanat-Komponente B) ein NCO-terminiertes Prepolymer, erhältlich aus einem Polyisocyanat und einer Polyolzusammensetzung umfassend ein Polyol A1, enthält,
    und
    **dass** das Polyetherthiocarbonat-Polyol eine oder mehrere funktionelle Gruppen -O-C(=S)-S- (Etherthiocarbonat-Gruppe) aufweist,
    und **dass** das Reaktionsgemisch aus den Komponenten A bis F einen Isocyanat-Index $\geq$ 140 aufweist.

2. Verfahren nach Anspruch 1, **dadurch gekennzeichnet, dass** das Reaktionsgemisch $\geq$ 4 Gew.-Teile, bezogen auf die Isocyanat-reaktive Komponente A, des Polyetherthiocarbonat-Polyols A1 enthält.

3. Verfahren nach Anspruch 1 oder 2, **dadurch gekennzeichnet, dass** das Polyetherthiocarbonat-Polyol A1 eine Funktionalität von $\geq$1,7 bis $\leq$ 3,3 und eine Hydroxylzahl von 20 bis 450 mg KOH/g aufweist.

4. Verfahren nach einem der vorangehenden Ansprüche, **dadurch gekennzeichnet, dass** das Reaktionsgemisch $\geq$ 50 Gew.-Teile, bezogen auf die Isocyanat-reaktive Komponente A, eines Polyesters oder eines Polyetheresters (A2a) enthält.

5. Verfahren nach einem der vorangehenden Ansprüche, **dadurch gekennzeichnet, dass** das Reaktionsgemisch 50,0 bis 96,0 Gew.-%, der Polyolkomponente A2a, welche ausgewählt ist aus einer oder mehreren Polyolen der Gruppe bestehend aus Polyesterpolyolen und Polyetheresterpolyolen in einem Hydroxylzahlbereich zwischen 160 bis 310 mg KOH/g und mit Funktionalitäten von $\geq$ 1,2 bis $\leq$ 3,5, und 4,0 - 34,0 Gew.-% eines Polyetherthiocarbonatpolyols mit einer Funktionalität von $\geq$1,7 bis $\leq$ 3,3, und einer Hydroxylzahl von 20 bis 450 mg KOH/g, enthält.

6. Verfahren nach einem der vorstehenden Ansprüche, **dadurch gekennzeichnet, dass** der Isocyanat-Index > 180 bis < 450, besonders bevorzugt $\geq$ 300 bis $\leq$ 400 beträgt.

7. Verfahren nach einem der vorstehenden Ansprüche, **dadurch gekennzeichnet, dass** das Reaktionsgemisch einen aminischen Katalysator D1) und einen Katalysator D2) ausgewählt aus der Gruppe enthaltend Alkali- und Erdalkalicarboxylate enthält.

8. Verfahren nach einem der vorstehenden Ansprüche, **dadurch gekennzeichnet, dass** das Reaktionsgemisch keine organischen Chlor- oder Bromverbindungen enthält.

9. Verfahren gemäß einem der vorangehenden Ansprüche, **dadurch gekennzeichnet dass** das Treibmittel C ein physikalisches Treibmittel ausgewählt ist aus einer oder mehreren Verbindungen aus der Gruppe enthaltend Kohlenwasserstoffe, halogenierten Ethern und (per)fluorierte Kohlenwasserstoffe, insbesondere Pentanisomere und/oder (hydro)fluorierte Olefine.

10. Verfahren gemäß einem der vorangehenden Ansprüche, weiterhin umfassend den Schritt ii) Aufbringen des Reaktionsgemisches mittels einer Gießvorrichtung auf eine bewegte Deckschicht.

11. Verfahren gemäß dem vorangehenden Anspruch, **dadurch gekennzeichnet, dass** das Verfahren kontinuierlich oder diskontinuerlich durchgeführt wird.

12. Polyurethan/Polyisocyanurat (PUR/PIR)-Hartschaum, erhältlich nach einem Verfahren gemäß einem der Ansprüche 1 - 10.

13. Verbundelemente, enthaltend eine oder zwei Deckschichten und einen PUR/PIR - Hartschaum gemäß Anspruch 11.

14. Verwendung eines PUR/PIR-Hartschaums gemäß Anspruch 11 für die technische Isolierung von Geräten wie Kühlschränken, Kühltruhen, Kühlgefrierkombinationen und Boilern, Kühlcontainern und Kühlboxen sowie von Rohren, für die Herstellung von Dämmplatten, aus Blöcken herausgearbeiteten Formteilen, ebenen oder linierten Wandelementen oder profilierten Dachelementen für den Industriehallen- und Kühlhausbau, oder für LKW-Aufbauten, Hallentüren oder Transportcontainer.

Europäisches
Patentamt

European
Patent Office

Office européen
des brevets

# EUROPÄISCHER RECHERCHENBERICHT

Nummer der Anmeldung

EP 18 17 8082

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | EP 1 632 511 A1 (BAYER MATERIALSCIENCE AG [DE]) 8. März 2006 (2006-03-08) * Absätze [0001], [0008]; Ansprüche 1-4 * * Beispiele 4, 5 * | 1-14 | INV. C08G18/16 C08G18/18 C08G18/22 C08G18/40 |
| A | WO 2013/178623 A1 (BASF SE [DE]; BASF SCHWEIZ AG [CH]) 5. Dezember 2013 (2013-12-05) * Seite 1, Zeile 6 - Zeile 9; Ansprüche 1-19 * * Varianten 1-3 * * Seite 21 - Seite 22; Tabellen 1, 2 * | 1-14 | C08G18/42 C08G18/44 C08G18/76 C08J9/08 C08J9/14 C08J9/00 C08K5/521

ADD. C08G101/00 |

RECHERCHIERTE SACHGEBIETE (IPC)

C08G
C08J
C08K

Der vorliegende Recherchenbericht wurde für alle Patentansprüche erstellt

| Recherchenort | Abschlußdatum der Recherche | Prüfer |
|---|---|---|
| München | 5. November 2018 | Paulus, Florian |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 17 8082

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-11-2018

| Im Recherchenbericht angeführtes Patentdokument | Datum der Veröffentlichung | Mitglied(er) der Patentfamilie | Datum der Veröffentlichung |
|---|---|---|---|
| EP 1632511 A1 | 08-03-2006 | BR PI0503639 A | 11-04-2006 |
| | | CA 2517551 A1 | 02-03-2006 |
| | | CN 1746203 A | 15-03-2006 |
| | | DE 102004042525 A1 | 09-03-2006 |
| | | EP 1632511 A1 | 08-03-2006 |
| | | JP 2006089739 A | 06-04-2006 |
| | | KR 20060050902 A | 19-05-2006 |
| | | PL 1632511 T3 | 31-08-2017 |
| | | US 2006047011 A1 | 02-03-2006 |
| WO 2013178623 A1 | 05-12-2013 | AU 2013269763 A1 | 18-12-2014 |
| | | CA 2874910 A1 | 05-12-2013 |
| | | CN 104736599 A | 24-06-2015 |
| | | EP 2855557 A1 | 08-04-2015 |
| | | ES 2642859 T3 | 20-11-2017 |
| | | HU E036775 T2 | 30-07-2018 |
| | | JP 6265977 B2 | 24-01-2018 |
| | | JP 2015523431 A | 13-08-2015 |
| | | KR 20150027153 A | 11-03-2015 |
| | | PT 2855557 T | 13-10-2017 |
| | | RU 2014153659 A | 27-07-2016 |
| | | WO 2013178623 A1 | 05-12-2013 |
| | | ZA 201409465 B | 31-05-2017 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1359177 A
- US 7304172 B2
- US 20120165549 A1
- EP 2910585 A
- WO 2010043624 A
- EP 1923417 A
- DE 1609668 A
- DE 1247612 A
- EP 2216156 A1
- WO 2013107742 A
- WO 2013107739 A
- WO 2017021463 A
- EP 1632511 A

**In der Beschreibung aufgeführte Nicht-Patentliteratur**

- **M. H. CHISHOLM et al.** *Macromolecules,* 2002, vol. 35, 6494
- **S. D. ALLEN.** *J. Am. Chem. Soc.,* 2002, vol. 124, 14284
- *Chemical Communications,* 2011, vol. 47, 141-163
- **IONESCU.** Chemistry and Technology of Polyols for Polyurethanes. Rapra Technology Limited, 2005, 55 ff
- Polyurethane. Kunststoffhandbuch. vol. 7